# EUROPEAN PATENT APPLICATION

(11) **EP 2 808 768 A1**
(43) Date of publication of application: **03.12.2014**
(21) Application number: 14170124.3
(22) Date of filing: 27.05.2014
(51) Int. Cl.: G06F 3/042, G06F 3/048, H04N 9/31

(54) **Manipulation input device, manipulation input system, and manipulation input method**

(30) Priority: 29.05.2013 JP 2013113484
(71) Applicant: Funai Electric Co., Ltd., Daito-shi, Osaka 574-0013 (JP)
(72) Inventor: Chikaoka, Atsuhiko, Daito-shi, Osaka 574-0013 (JP); Nishioka, Ken, Daito-shi, Osaka 574-0013 (JP); Izukawa, Shintaro, Daito-shi, Osaka 574-0013 (JP)
(74) Representative: Global IP Europe Patentanwaltskanzlei

(57) **Abstract**

A manipulation input device includes a projection component, a photodetector, and a position calculator. The projection component is configured to project an image on a projection surface by scanning light from a light source. The photodetector is configured to detect as scattered light the light reflected by a manipulation object that has moved into a specific detection range including the projection surface. The position calculator is configured to calculate a distance of the manipulation object from a reference point based on a continuous detection duration during which the photodetector continuously detects the scattered light, the position calculator being further configured to calculate coordinates of the manipulation object on the projection surface based on the distance of the manipulation object from the reference point and position information indicating a scanning position of the light on the projection surface when the photodetector has detected the scattered light.

## Description

### CROSS-REFERENCE TO RELATED APPLICATIONS

This application claims priority to Japanese Patent Application No. 2013-113484 filed on May 29, 2013. The entire disclosure of Japanese Patent Application No. 2013-113484 is hereby incorporated herein by reference.

### BACKGROUND

### Field of the Invention

The present invention generally relates to a manipulation input device and a manipulation input method. More specifically, the present invention relates to a manipulation input device and a manipulation input method for inputting user manipulation of a projected image.

### Background Information

Conventionally, a sensor device is well known in the art that detects the coordinates of an object used for manipulation input by using a scanning light beam that produced a projected image (see Japanese Unexamined Patent Application Publication No. 2012-026936 (Patent Literature 1), for example). With the sensor device in Patent Literature 1, first a light beam projected from a light source is scanned vertically and horizontally by a polarizer and thereby projected on an irradiated surface. When a manipulation object moves into a detection space that includes the irradiated surface, a photodetector receives the light beam reflected by the manipulation object, and generates a light reception signal. This sensor device outputs a timing signal at a timing corresponding to discrete scanning points of the light beam on the irradiated surface. The sensor device recognizes an object by determining the coordinates of the manipulation object on the irradiated surface based on the timing signal and the output of the photodetector.

That is, the sensor device in Patent Literature 1 is configured to allow reflected light from the manipulation object to be received by the photodetector. The light reception signal of the photodetector is monitored to detect that the manipulation object has moved into a detection space, and the detection position is determined from this and from the above-mentioned timing signal. This makes possible user input manipulation corresponding to the specified detection position.

### SUMMARY

With the sensor device discussed in Patent Literature 1, the manipulation object is detected that is within the detection space located in between the light source and the irradiated surface. In this case, it has been discovered that if the manipulation object is detected that is not on the irradiated surface and is within the detection space, there will be a large error in the detection position specified as the coordinates on the irradiated surface. That is, since the three-dimensional position of the manipulation object in the detection space is determined as coordinates in a two-dimensional plane of the irradiated surface based on the timing signal and the light reception signal of the photodetector, the error in the detection position increases. Thus, manipulation input made based on this detection position is inaccurate, so manipulation convenience is lost.

Also, it has been discovered that the above-mentioned error in detection position can be suppressed if the detection space is kept within the range of the detection space with the distance from the light source kept constant. In this case, however, the light reception signal at the photodetector will be weak, and misdetection will end up happening often.

One aspect is to provide a manipulation input device, a manipulation input system, and a manipulation input method with which the position of a manipulation object is recognized accurately, and good input manipulation convenience is achieved.

In view of the state of the known technology, a manipulation input device is provided that includes a projection component, a photodetector, and a position calculator. The projection component is configured to project an image on a projection surface by scanning light from a light source. The photodetector is configured to detect as scattered light the light reflected by a manipulation object that has moved into a specific detection range including the projection surface. The position calculator is configured to calculate a distance of the manipulation object from a reference point based on a continuous detection duration during which the photodetector continuously detects the scattered light, the position calculator being further configured to calculate coordinates of the manipulation object on the projection surface based on the distance of the manipulation object from the reference point and position information indicating a scanning position of the light on the projection surface when the photodetector has detected the scattered light.

Also other objects, features, aspects and advantages of the present disclosure will become apparent to those skilled in the art from the following detailed description, which, taken in conjunction with the annexed drawings, discloses selected embodiments of the manipulation input device, the manipulation input system, and the manipulation input method.

### BRIEF DESCRIPTION OF THE DRAWINGS

Referring now to the attached drawings which form a part of this original disclosure:
FIG. 1 is a perspective view of a manipulation input system in accordance with a first embodiment;
FIG. 2 is a block diagram of the manipulation input system illustrated in FIG. 1;
FIG. 3A is a schematic diagram of a manipulation input system in accordance with a comparative example;
FIG. 3B is a schematic diagram of the manipulation input system illustrated in FIG. 3A, illustrating the principle behind detecting a manipulation object with the manipulation input system illustrated in FIG. 3A;
FIG. 4A is a schematic diagram illustrating comparison of the detection states of a manipulation object in different insertion states in a projection area;
FIG. 4B is a schematic diagram illustrating relation between the detection width and the distance of the manipulation object from a light source in the different insertion states;
FIG. 4C is a graph illustrating comparison of the detection duration at a photodetector for the manipulation object in the different insertion states;
FIG. 5 is a graph illustrating the relation between the detection width of the manipulation object and the distance from a reference position;
FIG. 6 is a schematic diagram illustrating comparison of the calculated manipulation points of the manipulation object between the first embodiment and the comparison example;
FIG. 7 is a flowchart illustrating the manipulation input method in accordance with the first embodiment;
FIG. 8 is a schematic diagram illustrating a dynamic correction of a reference width of a manipulation input device in accordance with a second embodiment;
FIG. 9A is a schematic diagram of a first static correction of a reference width in a manipulation input system in accordance with a third embodiment;
FIG. 9B is a schematic diagram of a second static correction of the reference width in the manipulation input system in accordance with the third embodiment; and
FIG. 10 is a schematic diagram illustrating an application example of a manipulation input system in accordance with a fourth embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layout positions and connection mode of the constituent elements, steps, the order of steps and so forth described in the following embodiments are provided all just for illustration only and not for the purpose of limiting the the invention. The invention is merely defined by the appended claims. Of the constituent elements in the following embodiments, those not discussed in an independent claim are not necessarily required, but will be described for understanding of the embodiments.

### FIRST EMBODIMENT

### Basic Configuration of Manipulation Input Device

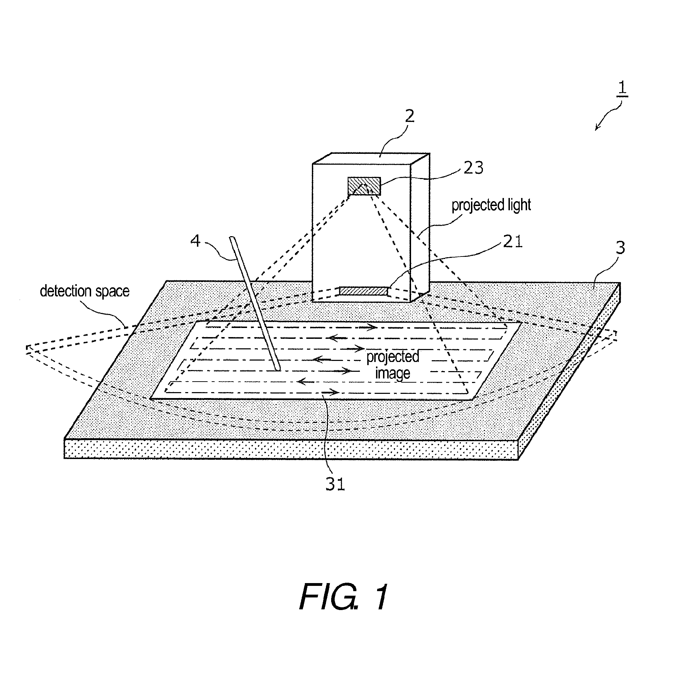

Referring initially to FIG. 1, a manipulation input system 1 is illustrated in accordance with a first embodiment. FIG. 1 is a perspective view of the manipulation input system 1. The manipulation input system 1 in accordance with this embodiment basically includes a manipulation input device 2, a manipulation display board 3, and a manipulation pen 4.

The manipulation input device 2 emits projected light, scanning it horizontally and vertically, from a projection opening 23 toward a projection area 31 disposed on the surface of the manipulation display board 3. Consequently, a manipulation input-use image is projected in the projection area 31.

The user looks at the projected image on the projection area 31, and designates a position on the projection area 31 with a rod-shaped manipulation object, such as the manipulation pen 4 or a finger.

The manipulation input device 2 uses a light receiver 21 to detect projected light that has been reflected or scattered by the manipulation pen 4 (hereinafter referred to collectively as scattered light). The light receiver 21 recognizes the position of the manipulation pen 4 based on the above-mentioned detection result and the scanning state of the projected light beam, and specifies the coordinates of the manipulation pen 4 on the projection area 31. An opening region is provided to the light receiver 21 so that the light receiver 21 will be able to detect the scattered light from the manipulation pen 4 located in the projection area 31. This sets a space in which detection is possible, which is a light detection range limited to within a predetermined range in a direction perpendicular to the projection area 31, as shown in FIG. 1.

The manipulation input device 2 is a projector that measures position information about the manipulation pen 4 and designates the display content outputted to the projection area 31, which is the projection surface, or the control content of a computer (not shown) that is connected to the manipulation input device 2.

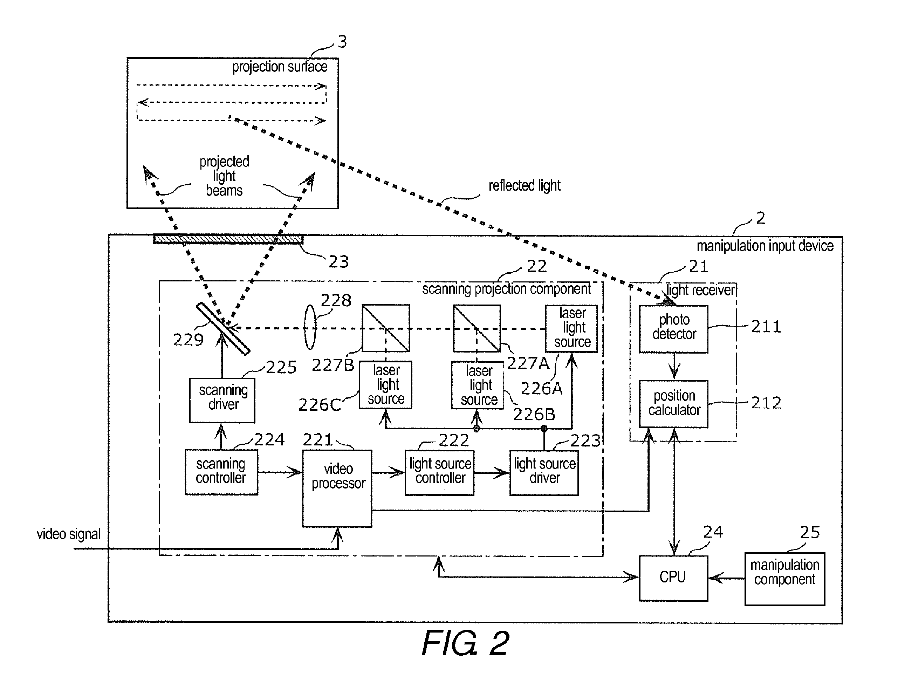

FIG. 2 is a block diagram of the manipulation input system 1. In this embodiment, the manipulation input device 2 that is part of the manipulation input system 1 includes the light receiver 21, a scanning projection component 22, the projection opening 23, a CPU 24, and a manipulation component 25. The constituent elements of the manipulation input device 2 will now be described.

The scanning projection component 22 is a projector that makes use of the laser scanning method. The laser beam outputted by a laser beam generator is scanned in the main scanning direction (horizontally) and the sub-scanning direction (vertically) to project an image on the surface of the projection area 31. The laser beam generator is, for example, made up of three laser light sources 226A, 226B, and 226C, dichroic mirrors 227A and 227B, and a lens 228, and generates a laser beam that reflects image information for use in image formation in the projection area 31.

The laser light sources 226A to 226C are laser diodes (LDs) that output laser beams with mutually different color components, and are drive independently of each other by drive current supplied individually from a light source driver 223, thereby outputting laser beams of monochromatic components. Consequently, monochromatic component laser beams of specific wavelengths are emitted, such as a red component (R) from the laser light source 226A, a green component (G) from the laser light source 226B, and a blue component (B) from the laser light source 226C.

The dichroic mirrors 227A and 227B transmit only laser light of a specific wavelength, and reflect the rest, which combines the laser beams of the various color components emitted from the laser light sources 226A to 226C. More specifically, laser beams of red and green components emitted from the laser light sources 226A and 226B are combined at the dichroic mirror 227A on the upstream side of the optical path, and the resulting beam is emitted to the dichroic mirror 227B on the downstream side of the optical path. The combined beam thus emitted is further combined with the laser beam of the blue component emitted from the laser light source 226C at the dichroic mirror 227B, and is emitted at a scanning mirror 229 as the final, targeted color light.

The scanning mirror 229 deflects and scans the laser beam combined at the above-mentioned laser beam generator, and thereby projects an image in the projection area 31 on the manipulation display board 3. A MEMS (micro-electro-mechanical system) type of scanning mirror, which is advantageous in terms of small size, low power consumption, and faster processing, for example, is used as the scanning mirror 229. The scanning mirror 229 is scanned and displayed in the horizontal direction (X) and the vertical direction (Y) by a scanning driver 225 to which drive signals are inputted from a scanning controller 224.

A video processor 221 sends video data to a light source controller 222 at regular time intervals based on video signals inputted from the outside (such as a personal computer). As a result, the light source controller 222 obtains pixel information at a specific scanning position. The video processor 221 also sends scanning angle information, that is, information about the scanning position of projected light at a certain time, to the light receiver 21.

The light source controller 222 controls the light source driver 223 with drive current waveform signals in order to project video formed of a plurality of pixels in a projection range based on the above-mentioned pixel information.

The light source driver 223 generates light by driving the laser light sources 226A to 226C under control by the light source controller 222. The laser light sources 226A to 226C generate and output laser beams when current is supplied at or above an oscillation threshold current value from the light source driver 223, and output laser beams whose output (light quantity) increases in proportion to the amount of current being supplied. The laser light sources 226A to 226C stop outputting laser beams when current is supplied at below the oscillation threshold current value.

The light receiver 21 includes a photodetector 211 and a position calculator 212.

The photodetector 211 detects scattered light from the manipulation pen 4 that has moved into the detection space (this light coming from the projected light beam scanned by the scanning projection component 22), and sends a detection signal indicating the detection to the position calculator 212.

When the above-mentioned detection signal is received from the photodetector 211, the position calculator 212 specifies the scanning position in the projection area 31 of the projected light beam at the point of detection of the manipulation pen 4 that has moved into the detection space based on the scanning angle information received from the video processor 221. The position calculator 212 also acquires the continuous detection duration, during which the photodetector 211 continuously detects scattered light while the scanning projection component 22 is scanning in the horizontal direction, based on the light reception signal from this projected light beam. The position calculator 212 also calculates as the detection width of the manipulation pen 4 the scanning interval in the projection area 31 corresponding to the continuous detection duration based on the continuous detection duration and the scanning rate or speed at which the projected light beam is scanned. The position calculator 212 also calculates the distance between the manipulation pen 4 and the light source (e.g., the reference point) based on the reference width corresponding to the actual width of the manipulation pen 4 in the main scanning direction, which is stored ahead of time in a memory, etc. The position calculator 212 then calculates the coordinates of the manipulation pen 4 in the projection area 31 in order to execute the control content or to display the display content, based on the calculated distance and the scanning position of the projected light beam in the projection area 31.

The CPU 24 is a processor that gives instructions to the drive controller of the scanning projection component 22. The CPU 24 has a memory that holds data and so forth for controlling the scanning state of the scanning mirror 229.

The manipulation component 25 accepts manipulation to switch on the power supply of the manipulation input device 2, manipulation to change the angle of projection of image information, manipulation to change the resolution of the projected image, and so on.

### Comparative Example

The configuration of a manipulation input system in accordance with a comparative example will now be described.

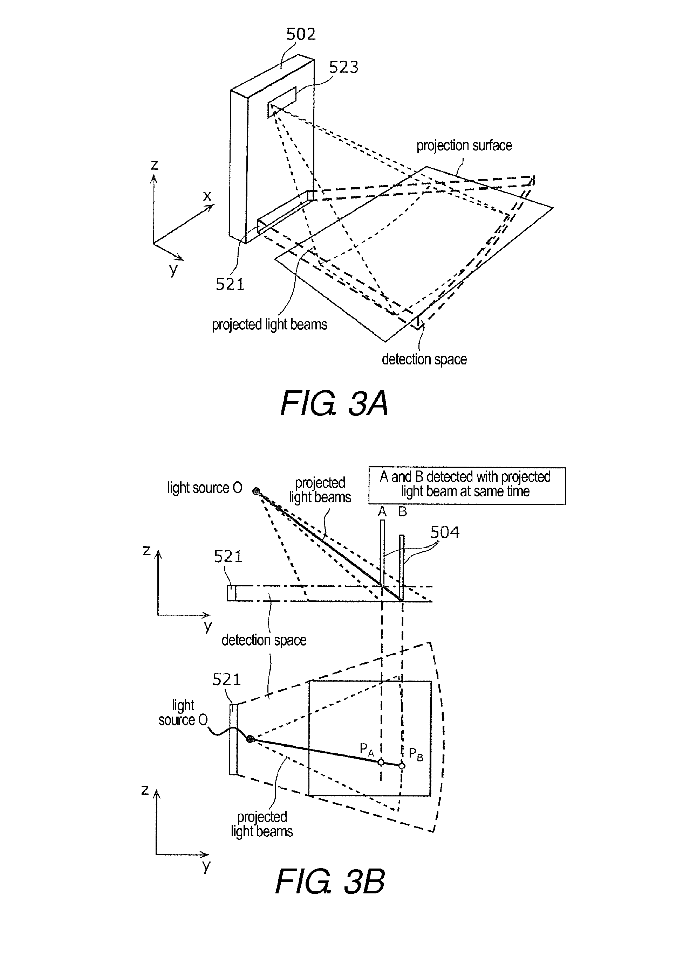

FIG. 3A is a simplified diagram of the configuration of the manipulation input system in accordance with the comparative example. The constituent elements of this manipulation input system are substantially the same as those of the manipulation input system in accordance with the first embodiment. With this manipulation input system, a manipulation input device 502 emits a laser beam from a projection opening 523 toward a projection surface on a manipulation display board. The manipulation input device 502 detects scattered light from a manipulation object with a light receiver 521. The light receiver 521 recognizes the position of the manipulation object based on the above-mentioned detection result and the scanning state of the projected light, and produces user manipulation input. An opening region of the light receiver 521 is provided so that the light receiver 521 can detect scattered light from the manipulation object. Consequently, the detection space shown in FIG. 3A is set.

FIG. 3B is a diagram illustrating the principle behind detecting the manipulation object with the manipulation input system in accordance with the comparative example. With this manipulation input system, the pixel position on the screen, which is drawn at the point when light is detected, is specified based on information about this timing, and this pixel position serves as the position designated by user manipulation. In this case, any manipulation object located on the projected light beam at that time ends up being specified as the same position, regardless of the actual position. More specifically, FIG. 3B illustrates a case in which a manipulation pen 504 is in insertion states A and B within the detection space. In the insertion state A, the manipulation pen 504 is not touching the projection surface, and is not as far from the light source as the manipulation pen 504 is in the insertion state B. P_{A} is the position where the manipulation pen 504 in the insertion state A is supposed to be specified on the projection surface, and P_{B} is the position where the manipulation pen 504 in the insertion state B is supposed to be specified on the projection surface. However, with this manipulation input system, the manipulation pen 504 is detected based on the scattered light from the projected light beams at the same time. Consequently, the position of the manipulation pen 504 in the insertion state A on the projection surface ends up being specified as P_{B}. Accordingly, there is a larger position error for the manipulation pen 504 in the insertion state A. This lowers the precision of manipulation input made based on this detection position, and makes manipulation less convenient.

This happens because with the manipulation input system in accordance with the comparative example, the position on the projection surface is specified without including position information for the height direction of the manipulation pen 504 (the Z direction in FIG. 3B), that is, three-dimensional information.

In contrast, with the manipulation input system in accordance with the first embodiment, the position calculator 212 calculates where the manipulation object is located on the projected light beam from the light source O up to the projection area 31 based on detection width information and timing information at the point of light detection, and the point thus calculated is used to specify the coordinates of the manipulation object on the projection surface. This prevents the errors that occur with the manipulation input system in accordance with the comparative example, and the decrease in manipulation convenience caused by this error.

### Calculation Principle of Manipulation Input Device

The principle by which the manipulation input device 2 specifies the position of the manipulation object will now be described.

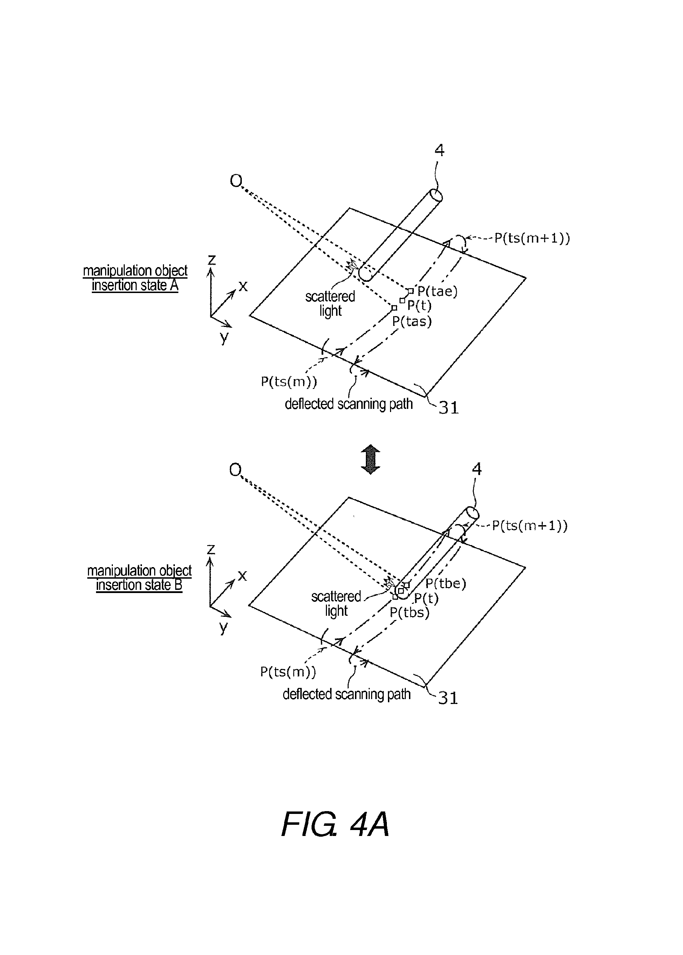

FIG. 4A is a schematic diagram illustrating comparison of the detection states of the manipulation object in different insertion states in the projection area 31. FIG. 4A illustrates a case in which the manipulation pen 4 is in insertion states A and B within the detection space, just as with the insertion states A and B shown in FIG. 3B. In the insertion state A, the manipulation pen 4 is not touching the projection area 31, and is not as far from the light source O as the manipulation pen 4 is in the insertion state B. The photodetector 211 here detects the manipulation pen 4 from the scattered light from the projected light beam having the same scanning angle for the insertion states A and B.

However, with the manipulation input device 2, if the detection width of the manipulation pen 4 is acquired, it can be calculated where the manipulation pen 4 is located on the light beam linking the light source O and a point P(t) reached by the projected light beam in the projection area 31. The principle behind acquiring the detection width of the manipulation pen 4 will now be described. In the illustrated embodiment, for example, the light source O as the reference point is defined by a light emitting or reflecting point on the scanning mirror 229 that deflects and scans the laser beam. However, the light source O can be differently defined as needed and/or desired.

In the insertion state A in FIG. 4A, the manipulation pen 4 is detected in the interval while the projected light beam is being scanned horizontally between the starting point P(ts(m)) of the m-th horizontal scan and the starting point P(ts(m+1)) of the (m+1)-th horizontal scan. At this point the photodetector 211 detects the scattered light from the manipulation pen 4 in the scanning interval of P(tas) to P(tae). The scanning interval of P(tas) to P(tae) here is the detection width at which the photodetector 211 continuously detects the scattered light from the manipulation pen 4 in the insertion state A while the scanning projection component 22 is scanning horizontally. In contrast, the manipulation pen 4 is similarly detected in the interval in which the projected light beam is being scanned horizontally between P(ts(m)) and P(ts(m+1)) in the insertion state B in FIG. 4A. At this point the photodetector 211 detects the scattered light from the manipulation pen 4 in the interval between P(tbs) and P(tbe). The scanning interval of P(tbs) to P(tbe) here is the detection width at which the photodetector 211 continuously detects scattered light from the manipulation pen 4 in the insertion state B while the scanning projection component 22 is scanning horizontally.

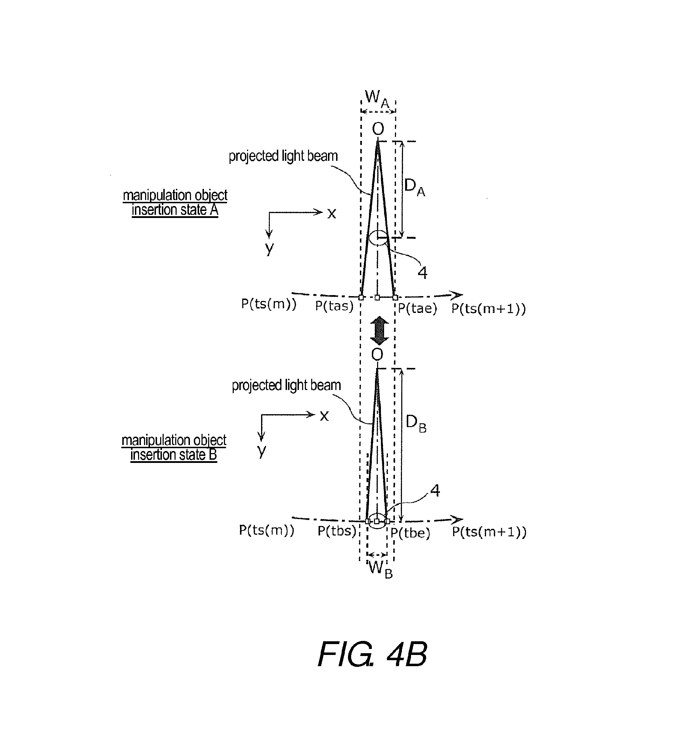

FIG. 4B is a schematic diagram illustrating relation between the detection width and the distance of the manipulation object from the light source O in different insertion states.

As shown in FIG. 4B, the distance D_{A} from the light source O to the manipulation pen 4 in the insertion state A is shorter than the distance D_{B} from the light source O to the manipulation pen 4 in the insertion state B. Because of this relation, the detection width W_{A}, which is the range of the scanning angle at which the photodetector 211 continuously detects the manipulation pen 4 in the insertion state A, is greater than the detection width W_{B}, which is the range of the scanning angle at which the manipulation pen 4 in the insertion state B is detected. That is, the shorter is the distance D from the light source O to the manipulation pen 4, the greater is the detection width W.

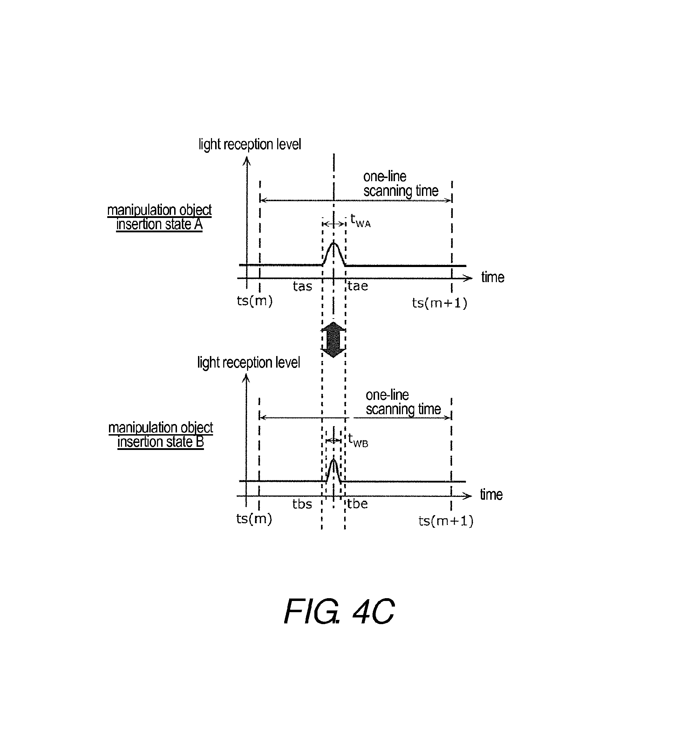

FIG. 4C is a graph illustrating comparison of the detection duration at the photodetector 211 for the manipulation object in different insertion states. More specifically, FIG. 4C shows a time chart for a light reception signal detected by the photodetector 211. At the photodetector 211, the continuous detection duration during which the scattered light from the manipulation pen 4 is continuously detected varies according to the distance D from the light source O to the manipulation pen 4. The position calculator 212 here acquires the duration over which the light reception level has changed at the photodetector 211, as the continuous detection duration of the manipulation pen 4. More specifically, t_{WA} is the continuous detection duration in the insertion state A, t_{WB} is the continuous detection duration in the insertion state B, and t_{WA} > t_{WB}.

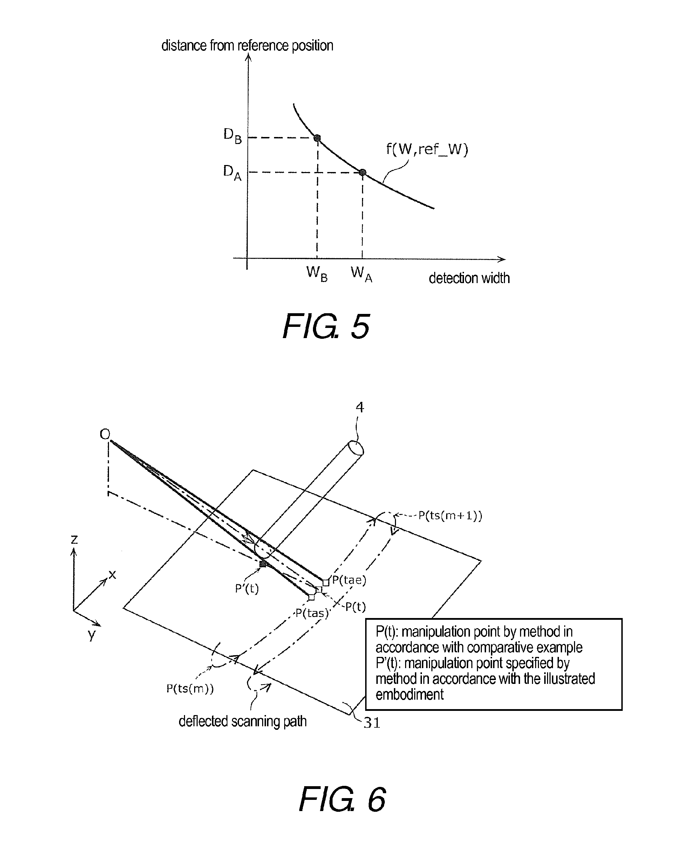

FIG. 5 is a graph illustrating the relation between the detection width of the manipulation object and the distance from the reference position. In this graph, the horizontal axis is the detection width of the manipulation object acquired by the position calculator 212, and the vertical axis is the distance of the manipulation object from the light source O (i.e., the reference position). The distance of the manipulation object from the light source O (i.e., the reference position) is calculated from the above-mentioned detection width W and the curve shown in FIG. 5. The curve or function f(W, ref_W) shown in FIG. 5 uses as a parameter the ratio of the acquired detection width W relative to the reference width ref_W, which is the actual width of the manipulation object in the horizontal scanning direction. For example, as shown in FIG. 5, the curve f(W, ref_W) indicates that the distance of the manipulation object become smaller as the ratio of the acquired detection width W relative to the reference width ref_W become greater.

That is, the position calculator 212 acquires the detection width W of the manipulation object based on the light reception signal obtained by the photodetector 211, and calculates the distance of the manipulation object from the light source O (i.e., reference position) by plugging the reference width ref_W of the manipulation object stored ahead of time in the memory of the manipulation input device 2, etc., and the detection width W into the curve f(W, ref_W).

Since the scanning rate of the projected light beam may not be uniform within the projection area 31, the conversion coefficient when calculating the detection width W from the continuous detection duration t_{W} is preferably one that varies with the scanning timing.

FIG. 6 is a schematic diagram illustrating comparison of the calculated manipulation points of the manipulation object between the first embodiment and the comparison example. With the manipulation input device 2 in accordance with the first embodiment, the position calculator 212 specifies the position of the manipulation pen 4 in the insertion state A in the projection area 31, while including the spatial position of the manipulation pen 4, based on the specified scanning position of the projected light beam and the distance D from the reference point that is calculated based on the relation (e.g., the curve) between the detection width W and the reference width ref_W. More specifically, in FIG. 6, in the insertion state A, the position of the manipulation pen 4 is specified as P'(t).

In contrast, with the manipulation input device in accordance with the comparison example, the position of the manipulation pen 4 in the insertion state A is specified as P(t).

### Effect

With the manipulation input device 2 in accordance with this embodiment, the distance D between the reference point and the manipulation object is calculated by acquiring the detection width W of the manipulation object detected from the projected light beam. Since this calculated distance D is included in the calculation of the coordinates of the manipulation object in the projection area 31, the coordinates of the manipulation object can be specified more precisely. This improves input manipulation convenience.

### Manipulation Input Method

Next, the manipulation input method in accordance with the first embodiment will be described.

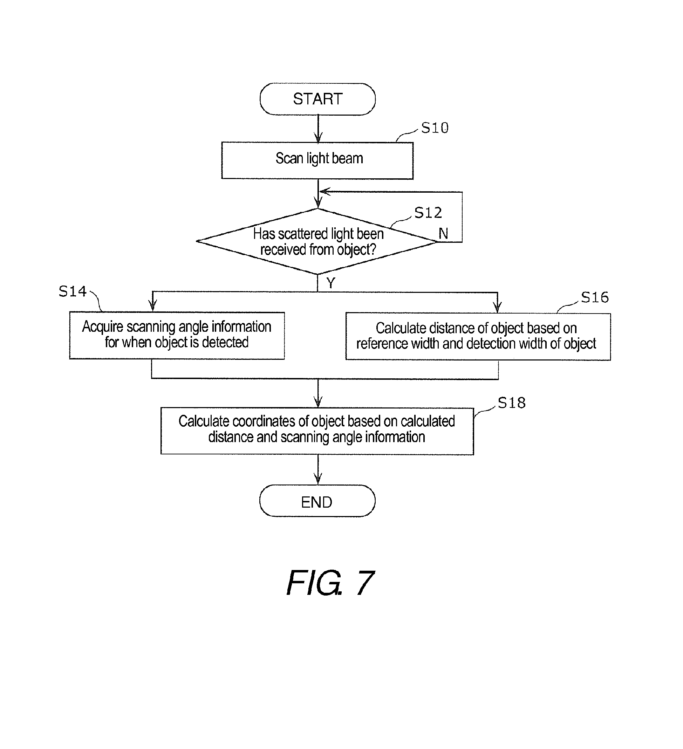

FIG. 7 is a flowchart illustrating the manipulation input method in accordance with the first embodiment. The manipulation input method in accordance with this embodiment is a method for designating the control content of the computer or the display content outputted on the projection area 31, by using the manipulation object to manipulate the desired position on the projection area 31 on which an image is displayed.

First, the scanning projection component 22 deflects and scans the light beam and emits the projected light beam toward the projection area 31 (S10). Step S10 is a projection step in which an image is projected in the projection area 31 by scanning light outputted by the light source in the main scanning direction (horizontally) and the sub-scanning direction (vertically).

Next, if scattered light has been received from the manipulation object (S12), then the position calculator 212 of the light receiver 21 acquires the scanning angle information from when the manipulation object has been detected from the scanning projection component 22 (S14). Step S12 is a detection step in which the scattered light from the manipulation object is detected if the manipulation object has moved into the detection space that is limited to a predetermined range or height in the vertical direction on surface of the projection area 31. Step S14 is a position acquisition step of acquiring the position information indicating the scanning position in the projection area 31 at the point when the manipulation object has been detected.

The position calculator 212 of the light receiver 21 also acquires the detection width W of the manipulation object, and calculates the distance D from the light source O (i.e., the reference position) to the manipulation object based on this detection width W and the reference width ref_W (S16). Step S16 is a distance calculation step in which the distance D of the manipulation object from the light source O (e.g., the reference point) is calculated based on the continuous detection duration during which the scattered light is continuously detected while the light is being scanned in the main scanning direction. More specifically, the above-mentioned distance D is calculated based on the continuous detection duration and the reference width ref_W, which is the actual width of the manipulation object.

Next, the position calculator 212 of the light receiver 21 calculates the coordinates of the manipulation object based on the calculated distance D and the acquired scanning angle information (S18). Step S18 is a coordinate calculation step in which the coordinates of the manipulation object on the projection area 31 are calculated in order to execute the control content or to display the display content, based on the distance D calculated in the distance calculation step and the position information acquired in the position acquisition step.

### Effect

With the above manipulation input method, the distance D between the reference position and the manipulation object is calculated by acquiring the detection width W of the manipulation object detected with the projected light beam. Since this calculated distance D is included in the calculation of the coordinates of the manipulation object on the projection area 31, the coordinates of the manipulation object can be specified more precisely. This improves input manipulation convenience.

Furthermore, since the manipulation pen 4 is a rod-shaped manipulation object, there is the possibility that the light receiver 21 will detect light reflected or scattered from the projected light beam from one end of the manipulation pen 4 to the other end. If this happens, precise position detection can be accomplished, for example, by having the position calculator 212 select the smallest detection width out of a plurality of detection widths acquired over a specific scanning angle range as position information about the distal end contact part of the manipulation pen 4.

### SECOND EMBODIMENT

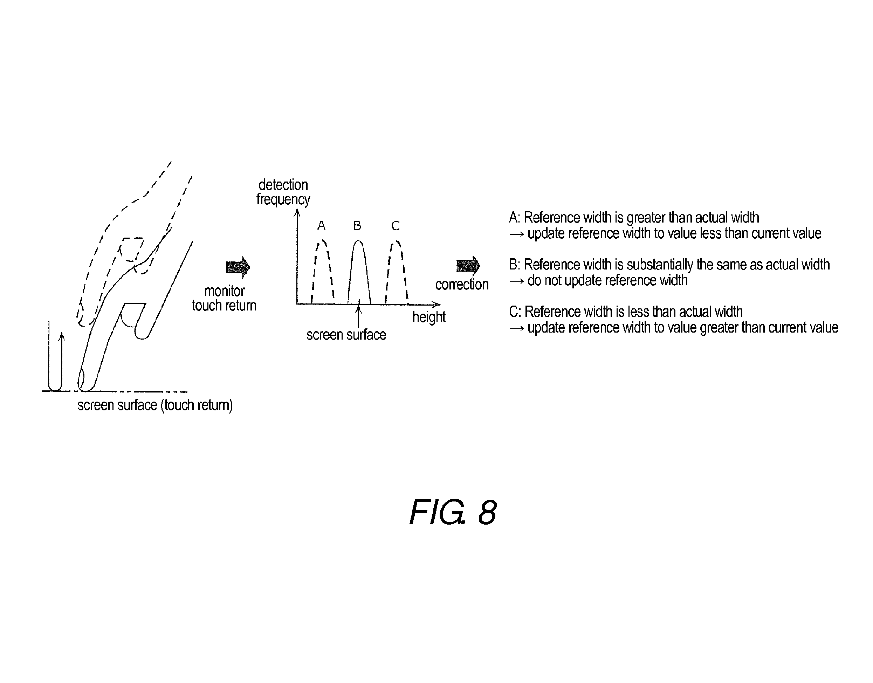

Referring now to FIG. 8, a manipulation input system with a manipulation input device in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. In this embodiment, a configuration will be described in which, rather than using a fixed data for a reference width corresponding to the actual width of a manipulation object that is stored in a memory or other such storage means, the reference width can be updated dynamically if there is a change in the manipulation object, etc.

FIG. 8 is a schematic diagram illustrating a dynamic correction or update of the reference width of the manipulation input device in accordance with the second embodiment. The reference width of the manipulation object can vary along with the environment in which a manipulation input system is used. For instance, there can be a case in which even though the manipulation object has been changed from a manipulation pen 4 (see FIG. 1) to a finger, the actual width of the manipulation pen 4 continues being used as the reference width. As shown in the middle in FIG. 8, if a finger is thicker than the manipulation pen 4, then even though that finger has correctly touched the screen surface, the acquired data will be as indicated by C. That is, the system will end up concluding that the finger is higher than the screen surface.

Assuming such a situation, the manipulation input device in accordance with this embodiment updates the reference width from data obtained during manipulation, instead of using fixed data stored ahead of time in a memory of the like as the reference width.

More specifically, for example, the CPU 24 (see FIG. 2) includes an update component for updating the reference width. The update component acquires, for a plurality of manipulations in each of which the manipulation object touches the surface of the projection area 31 (see FIG. 1), the distance between the light source and the manipulation object, which corresponds to the height of the manipulation object as described later. The distance between the light source and the manipulation object is calculated from the detection width acquired by the position calculator 212 and the reference width currently in use as described in the first embodiment. The sets of distance data thus acquired are acquired as distribution data for the distance, and the reference width is updated based on this distribution data. Of course, if the reference width currently in use is proper, then the distance representing the distribution data shown as B in FIG. 8 is substantially equal to the distance between the reference point and the projection area 31 along the light bean, which corresponds to the screen surface of the projection area 31 (see the graph in FIG. 8). In this case, the reference width currently in use is not updated. In the illustrated embodiment, although not illustrated, the CPU 24 includes the update component as a separate or integrated processor or carry out the above-mentioned function of the update component in accordance with a software. Of course, the update component can be a separate processor connected to the CPU 24.

As mentioned above, the height of the manipulation object corresponds to the distance between the light source and the manipulation object. In particular, the height of the manipulation object become larger as the distance between the light source and the manipulation object become smaller (see FIG. 3B, for example). In the illustrated embodiment, the distribution data shown in FIG. 8 is obtained based on the calculation of the distance between the light source and the manipulation object. However, of course, the distribution data shown in FIG. 8 can also be obtained by calculating the height of the manipulation object in a manner similar to the calculation of the distance between the light source and the manipulation object in accordance with the first embodiment. More specifically, the height of the manipulation object can be directly calculated based on the ratio of the acquired detection width W relative to the reference width ref_W when the relation between the ratio and the height of the manipulation object for each scanning position is stored in the memory of the manipulation input device.

If the distribution data shown as A in FIG. 8 is acquired, then it is determined that the reference width currently in use is greater than the width of the manipulation object currently in use. In particular, the distribution data shown as A in FIG. 8 is acquired when the distance representing the distribution data falls within a region in which it is greater than the distance between the reference point and the projection area 31 along the light bean, which corresponds to a lower area than the screen surface of the projection area 31 (see the graph in FIG. 8). Thus, the update component updates the reference width to a value that is less than the reference width currently in use. That is, the update component updates the reference width to a value that is less than the current value if the distance expressed by the distribution data falls within a region in which it is greater than the distance between the reference point and the projection area 31. More specifically, when the reference width currently in use is greater than the actual width of the manipulation object currently in use, the ratio of the acquired detection width W relative to the reference width currently in use, which is used to calculate the distance, becomes smaller than the the ratio of the acquired detection width W relative to the actual width of the manipulation object currently in use. This makes the calculation result of the distance of the manipulation object larger than the actual distance of the manipulation object.

On the other hand, if the distribution data shown as C in FIG. 8 is acquired, then the reference width currently in use is determined to be less than the width of the manipulation object currently in use. In particular, the distribution data shown as C in FIG. 8 is acquired when the distance representing the distribution data or larger part of the distribution data falls within a region in which it is less than the distance between the reference point and the projection area 31, which corresponds to a higher area than the screen surface of the projection area 31 (see the graph in FIG. 8). Thus the update component updates the reference width to a value that is greater than the reference width currently in use. That is, the reference width is updated to a value greater than the current value if the distance expressed by the distribution data is predominantly in a region in which it is less than the distance between the reference point and the projection area 31. More specifically, when the reference width currently in use is less than the actual width of the manipulation object currently in use, the ratio of the acquired detection width W relative to the reference width currently in use, which is used to calculate the distance, becomes larger than the the ratio of the acquired detection width W relative to the actual width of the manipulation object currently in use. This makes the calculation result of the distance of the manipulation object smaller than the actual distance of the manipulation object.

Instead of updating the reference width by means of distribution data obtained during an actual manipulation as discussed above, the reference width can be updated by acquiring a touch return path in which the manipulation object comes down from above onto the screen surface, touches the screen surface, and then rises up.

### Effect

With the manipulation input device in accordance with this embodiment, since reference data about the manipulation object can be updated based on actual data obtained during manipulation, precise specification of the position of the manipulation object can be ensured without stopping the function as a manipulation input device.

### THIRD EMBODIMENT

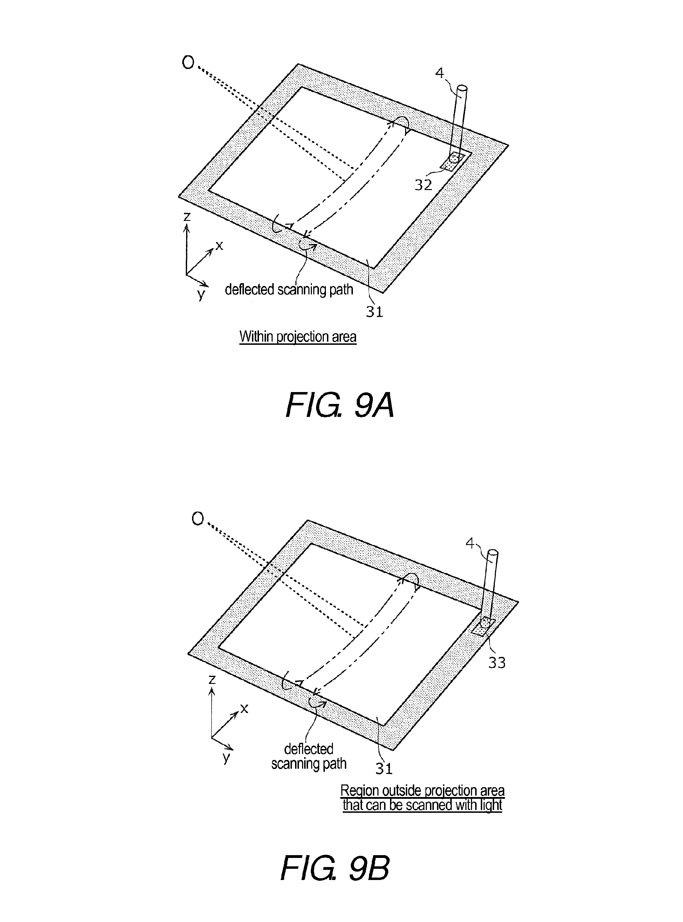

Referring now to FIGS. 9A and 9B, a manipulation input system with a manipulation input device in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity. In this embodiment, a configuration will be described in which, rather than using a fixed data for a reference width corresponding to the actual width of a manipulation object that is stored in a memory or other such storage means, the reference width can be updated if there is a change in the manipulation object, etc.

FIG. 9A is a schematic diagram illustrating a first static correction of a reference width in the manipulation input system in accordance with the third embodiment. FIG. 9B is a schematic diagram of a second static correction of the reference width in the manipulation input system in accordance with the third embodiment. The reference width of the manipulation object can vary along with the environment in which a manipulation input system is used. For instance, there can be a case in which even though the manipulation object has been changed from a manipulation pen 4 (see FIG. 1) to a finger, the actual width of the manipulation pen 4 continues being used as the reference width.

Assuming such a situation, with the manipulation input device in accordance with this embodiment, rather than using the data stored ahead of time in a memory of the like as the reference width, the reference width is updated prior to manipulation by bringing the manipulation pen 4 into contact with a specific update region 32 provided in the projection area 31. The update region 32 can be provided within the projection area 31 as in FIG. 9A. Alternatively, a specific update region 33 can be provided to the peripheral region around the projection area 31 as in FIG. 9B, as long as it is a space in which detection is possible.

More specifically, the CPU 24 (see FIG. 2) includes an update component for updating the reference width, for example. The CPU 24 (the update component) prompts the user to touch the manipulation pen 4 to the update region 32. The update component updates the reference width based on the continuous detection duration during which the photodetector 211 continuously detects scattered light, when the manipulation pen 4 has touched the update region 32. In the illustrated embodiment, although not illustrated, the CPU 24 includes the update component as a separate or integrated processor or carry out the above-mentioned function of the update component in accordance with a software. Of course, the update component can be a separate processor connected to the CPU 24.

### Effect

With the manipulation input device in accordance with this embodiment, since the reference width can be updated prior to manipulation, precise specification of the position of the manipulation object can be ensured without stopping the function as a manipulation input device.

The above-mentioned update region can be provided to the region farthest from the light source O, within the surface of the projection area 31 and the detection space. This results in achieving the shallowest angle at which the projected light beam enters the update region. Thus, a situation can be created in which the scattered light can be captured from just the height range close to the surface of the projection area 31, which allows the reference width to be measured more accurately.

### FOURTH EMBODIMENT

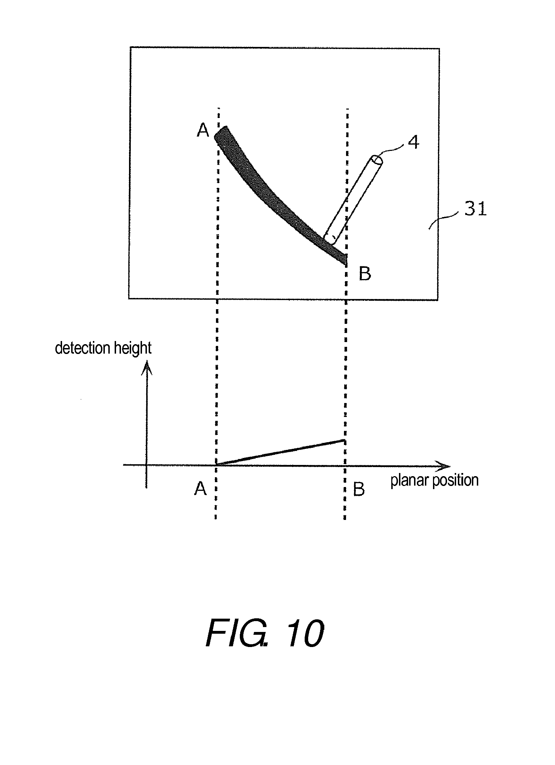

Referring now to FIG. 10, a manipulation input system with a manipulation input device in accordance with a fourth embodiment will now be explained. In view of the similarity between the first and fourth embodiments, the parts of the fourth embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity. The manipulation input system in accordance with this embodiment includes the manipulation input device 2 (see FIG. 1) according to any of the first to third embodiments, the manipulation object 4 (see FIG. 1) that indicates the position to be inputted within the projection area 31, and the manipulation display board 3 on which the projection area 31 is displayed. The manipulation input device 2 calculates input coordinates in the projection area 31 according to the distance between the manipulation pen 4 and the light source O calculated based on the reference width and the continuous detection duration during which the photodetector 211 continuously detects scattered light, and changes the size of the cursor displaying these coordinates according to this distance.

FIG. 10 is a schematic diagram illustrating an application example of the manipulation input system in accordance with the fourth embodiment. As shown in FIG. 10, the greater is the detection height of the manipulation pen 4 (i.e., the shorter is the distance from the light source O to the manipulation pen 4) (see point B in FIG. 10), the smaller is the cursor or image to be displayed in the projection area 31. On the other hand, the lower is the detection height of the manipulation pen 4 (i.e., the longer is the distance from the light source O to the manipulation pen 4) (see point A in FIG. 10), the larger is the cursor or image to be displayed in the projection area 31. That is, this manipulation input system can be applied as a graphic tool that matches information about the height of the manipulation object from the projection area to the thickness of the drawing lines.

### Effect

With the manipulation input system in accordance with this embodiment, information about the height direction (i.e., the distance from the light source to the manipulation object) can be effectively put to use. Thus, this height direction information can be used to provide the user with an application that is more convenient.

The manipulation input system in accordance with this embodiment can be such that layers are provided that divide the manipulation space (or detection space) into a plurality of sections in the height direction from the projection area 31, and different operations are performed according to the layer being manipulated. For example, the active application can correspond to manipulation of the lowermost layer, and the application can be switched, etc., to correspond to manipulation of the upper layers.

The manipulation input device, the manipulation input system, and the manipulation input method in accordance with the embodiments are described above. However, the present invention is not limited to or by the above embodiments.

In the above embodiments, an example is given of the configuration of the scanning projection component 22 in which laser beams of three color components, namely, a red component (R), a green component (G), and a blue component (B), are combined, and this combined light is scanned by a scanning mirror to project and display a color image on the projection surface. However, the present invention can also be applied to various kinds of image display device that displays a color image by combining laser beams of different color components outputted from a plurality of laser light sources. Also, in the above embodiments, an example is given in which the combined light is in a state of white balance. However, it is clear from the above description that the present invention can also be applied to other specific color states.

Also, a laser light source is used in the above embodiments as the light source, but this is not the only option, and an LED (light emitting diode) light source or the like can be used, for example, as the light source.

Also, the position calculator 212, the CPU 24, the manipulation component 25, and the drive controller forming the above-mentioned manipulation input device and manipulation input system can more specifically be formed by a computer system made up of a microprocessor, a ROM, a RAM, a hard disk drive, a display unit, a keyboard, a mouse, and so forth. Computer programs can be stored in the RAM or on the hard disk drive. The microprocessor operates according to a computer program, so that the manipulation input device and manipulation input system of the present invention achieve their function. The "computer program" here is made up of a combination of a plurality of command codes that give instructions to a computer in order to achieve a specific function.

Furthermore, these processors can be formed by a single system LSIC (large scale integrated circuit). A system LSI is a super-multifunctional LSIC manufactured by integrating a plurality of components on a single chip, and more specifically is a computer system that includes a microprocessor, a ROM, a RAM, etc. Computer programs are stored in the RAM. The system LSIC achieves its function when the microprocessor operates according to a computer program.

These processors can also be formed by a single module or an IC card that can be inserted into and removed from the above-mentioned manipulation input device and manipulation input system. This module or IC card is a computer system made up of a microprocessor, a ROM, a RAM, etc. The module or IC card can also include the above-mentioned super-multifunctional LSIC. When the microprocessor operates according to a computer program, the module or IC card achieves its function. This module or IC card can be tamper resistant.

Another aspect of the present invention is a manipulation input method. Specifically, the manipulation input method in accordance with the present invention is a manipulation input method for designating the display content to be outputted to a projection surface or the control content of a computer by using a manipulation object to manipulate the desired position on a projection surface on which an image is displayed, the method comprising a projection step of projecting the image on the projection surface by scanning light outputted by a light source in a main scanning direction and a sub-scanning direction, a detection step of detecting scattered light from the manipulation object when the manipulation object has moved into a specific detection range limited to within a predetermined range in the vertical direction of the projection surface, a position acquisition step of acquiring position information indicating the scanning position on the projection surface when the manipulation object has been detected, a distance calculation step of calculating the distance of the manipulation object from a reference point based on a continuous detection duration during when the scattered light is continuously detected while the light is being scanned in the main scanning direction, and a reference width that is the actual width of the manipulation object, and a coordinate calculation step of calculating the coordinates of the manipulation object on the projection surface in order to display the display content or to execute the control content, based on the position information acquired in the position acquisition step and the distance acquired in the distance calculation step.

The present invention can also be a computer program with which the above-mentioned manipulation input method is carried out by a computer, or a digital signal formed of the above-mentioned computer program.

Furthermore, the present invention can be such that the above-mentioned computer program or the above-mentioned digital signal is recorded to a permanent recording medium that can be read by a computer, such as a flexible disk, a hard disk, a CD-ROM, an MO, a DVD, a DVD-ROM, a DVD-RAM, a BD (Blu-ray™ Disc), or a semiconductor memory. It can also be the above-mentioned digital signal that is recorded to one of these permanent recording media.

The present invention can also be such that the above-mentioned computer program or the above-mentioned digital signal is transmitted via an electrical communications line, a wireless or wired communications line, a network (such as the Internet), data broadcast, etc.

The present invention can also be a computer system including a microprocessor and a memory, in which the memory stores the above-mentioned computer program, and the microprocessor operates according to the above-mentioned computer program.

Also, the present invention can be realized by another, independent computer system, if the above-mentioned computer program or the above-mentioned digital signal is recorded to one of the above-mentioned permanent recording media and transferred, or if the above-mentioned computer program or the above-mentioned digital signal is transferred via the above-mentioned network, etc.

The present invention can be applied to a projector or the like that projects onto a projection surface an image outputted by a personal computer, for example.

With one aspect of the present invention, a manipulation input device is provided that includes a projection component, a photodetector, and a position calculator. The projection component is configured to project an image on a projection surface by scanning light from a light source. The photodetector is configured to detect as scattered light the light reflected by a manipulation object that has moved into a specific detection range including the projection surface. The position calculator is configured to calculate a distance of the manipulation object from a reference point based on a continuous detection duration during which the photodetector continuously detects the scattered light, the position calculator being further configured to calculate coordinates of the manipulation object on the projection surface based on the distance of the manipulation object from the reference point and position information indicating a scanning position of the light on the projection surface when the photodetector has detected the scattered light.

With this aspect, the distance between the reference point and the manipulation object is calculated based on the continuous detection duration during which the scattered light from the manipulation object is continuously detected. That is, since the coordinates of the manipulation object on the projection surface are calculated with the above-mentioned calculated distance added, highly accurate coordinates that reflect three-dimensional information about the manipulation object can be specified. This makes it possible to enhance input manipulation convenience.

With the manipulation input device in accordance with one aspect of the present invention, the position calculator can be configured to calculate as a detection width of the manipulation object a scanning interval of the light on the projection surface corresponding to the continuous detection duration based on a scanning rate at which the light is scanned and the continuous detection duration, the position calculator being further configured to calculate the distance of the manipulation object from the reference point based on the detection width and the reference width corresponding to an actual width of the manipulation object.

With this aspect, it is possible to calculate the detection width, which is the scanning interval on the projection surface corresponding to the continuous detection duration, based on the continuous detection duration and the light scanning rate, and to calculate the distance of the manipulation object from the reference point based on the detection width and the reference width corresponding to the actual width of the manipulation object.

With the manipulation input device in accordance with one aspect of the present invention, the position calculator can be configured to determine the distance of the manipulation object from the reference point to be smaller the greater is a ratio of the detection width to the reference width.

With this aspect, it is possible to determine the position of the manipulation object precisely, with accurate three-dimensional information added.

The manipulation input device in accordance with one aspect of the present invention can further include an update component configured to acquire distribution data of the distance of the manipulation object from the reference point by acquiring the distance of the manipulation object from the reference point for a plurality of manipulations in each of which the manipulation object touches the projection surface, and configured to update the reference width based on the distribution data.

With this aspect, since the reference data about the manipulation object can be updated based on the actual data during manipulation, it is possible to ensure precise determination of the position of the manipulation object without stopping the function as a manipulation input device.

With the manipulation input device in accordance with one aspect of the present invention, the configuration can be such that while the distance of the manipulation object from the reference point representing the distribution data falls within a range greater than a distance between the reference point and the projection surface, the update component is configured to update the reference width to a value that is less than the current value, and while the distance of the manipulation object from the reference point representing the distribution data falls within a range less than the distance between the reference point and the projection surface, the update component is configured to update the reference width to a value that is greater than the current value.

With this aspect, precise correction of the reference width of the manipulation object is possible.

The manipulation input device in accordance with one aspect of the present invention can further include an update component configured to update the reference width based on the continuous detection duration in response to the manipulation object touching a specific update region on the projection surface.

With this aspect, since the reference width can be updated prior to manipulation, the precise position of the manipulation object can be determined without stopping the function as a manipulation input device.

With the manipulation input device in accordance with one aspect of the present invention, the update region can be located in a region farthest from the reference point on the projection surface within the detection range.

With this aspect, the angle at which the projected light beam enters the projection surface is shallowest in the update region. Thus, a situation can be created in which the scattered light from only a height range near the projection surface is ascertained, so the reference width can be measured more accurately.

Also, the manipulation input system in accordance with one aspect of the present invention includes the manipulation input device discussed above, the manipulation object configured to indicate an input position within the projection surface, and a manipulation display board on which the projection surface is displayed. The manipulation input device is further configured to change size of the image displayed at the coordinates of the manipulation object on the projection surface according to the distance of the manipulation object from the reference point.

With this aspect, since information about the height direction (corresponding to the distance from the reference point to the manipulation object) can be effectively utilized, it is possible to provide an application that is more convenient to the user by using this height direction information.

Also, the present invention can be realized not only as the manipulation input device and the manipulation input system having characteristic processors as described above, but also as a manipulation input method having characteristic steps that execute processing executed by the characteristic processors included in the manipulation input device and manipulation input system. The present invention can also be realized as a program for causing a computer to function as the characteristic processors included in the manipulation input device and manipulation input system, or a program that causes a computer to execute the characteristic steps included in the manipulation input method. It should also go without saying that this program can be distributed via a communications network such as the Internet, or a permanent recording medium that can be read by a computer, such as a CD-ROM (compact disc - read only memory).

With the manipulation input device in accordance with one aspect of the present invention, precise manipulation object coordinates can be calculated with the addition of the detection width of the manipulation object detected by the projected light beam. Thus input manipulation with the manipulation object can be made more convenient.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a manipulation input device in an upright position. Accordingly, these directional terms, as utilized to describe the manipulation input device should be interpreted relative to a manipulation input device in an upright position on a horizontal surface. Also, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A manipulation input device comprising:
a projection component configured to project an image on a projection surface by scanning light from a light source;
a photodetector configured to detect as scattered light the light reflected by a manipulation object that has moved into a specific detection range including the projection surface; and
a position calculator configured to calculate a distance of the manipulation object from a reference point based on a continuous detection duration during which the photodetector continuously detects the scattered light, the position calculator being further configured to calculate coordinates of the manipulation object on the projection surface based on the distance of the manipulation object from the reference point and position information indicating a scanning position of the light on the projection surface when the photodetector has detected the scattered light.

2. The manipulation input device according to claim 1, wherein
the position calculator is configured to calculate as a detection width of the manipulation object a scanning interval of the light on the projection surface corresponding to the continuous detection duration based on the continuous detection duration and a scanning rate at which the light is scanned, the position calculator being further configured to calculate the distance of the manipulation object from the reference point based on the detection width and a reference width corresponding to an actual width of the manipulation object.

3. The manipulation input device according to claim 2, wherein
the position calculator is configured to determine the distance of the manipulation object from the reference point to be smaller the greater is a ratio of the detection width relative to the reference width.

4. The manipulation input device according to claim 2 or 3, further comprising
an update component configured to acquire distribution data of the distance of the manipulation object from the reference point by acquiring the distance of the manipulation object from the reference point for a plurality of manipulations in each of which the manipulation object touches the projection surface, and configured to update the reference width based on the distribution data.

5. The manipulation input device according to claim 4, wherein,
the update component is configured to update the reference width to a value that is less than the current value while the distance of the manipulation object from the reference point representing the distribution data falls within a range greater than a distance between the reference point and the projection surface, and
the update component is configured to update the reference width to a value that is greater than the current value while the distance of the manipulation object from the reference point representing the distribution data falls within a range less than the distance between the reference point and the projection surface.

6. The manipulation input device according to claim 2 or 3, further comprising
an update component configured to update the reference width based on the continuous detection duration in response to the manipulation object touching a specific update region on the projection surface.

7. The manipulation input device according to claim 6, wherein
the update region is located in a region farthest from the reference point on the projection surface within the detection range.

8. A manipulation input system comprising:
the manipulation input device according to any one of claims 1 to 7;
the manipulation object configured to indicate an input position within the projection surface; and
a manipulation display board on which the projection surface is displayed,
the manipulation input device being further configured to change size of the image displayed at the coordinates of the manipulation object on the projection surface according to the distance of the manipulation object from the reference point.

9. A manipulation input method comprising:
projecting an image on a projection surface by scanning light from a light source;
detecting as scattered light the light reflected by a manipulation object that has moved into a specific detection range including the projection surface;
acquiring position information indicating a scanning position of the light on the projection surface when the scattered light has been detected;
calculating a distance of the manipulation object from a reference point based on a continuous detection duration during which the scattered light is continuously detected while the light is scanned in a main scanning direction; and
calculating coordinates of the manipulation object on the projection surface based on the position information and the distance of the manipulation object from the reference point.
